# EUROPEAN PATENT APPLICATION

(11) **EP 1 494 402 A1**
(43) Date of publication of application: **05.01.2005**
(21) Application number: 03447175.5
(22) Date of filing: 01.07.2003
(51) Int. Cl.: H04L 12/56

(54) **Transmission control device and process for an interface between communication networks and associated products**

(71) Applicant: Thomson Multimedia Broadband Belgium, 2650 Edegem (BE)
(72) Inventor: Van de Poel, Dirk, 2018 Antwerpen (BE); Voet, Jan, 2970 Schilde (BE)
(74) Representative: Kerber, Thierry

(57) **Abstract**

The present invention concerns transmission control device (1) and process for an interface (10) between communication origin and access networks. Each data block (F) circulating in the origin network is liable to be segmented and transformed at the interface into cells (Ci) able to circulate in the access network, and intended to be sent successively from the interface.

The control device comprises means for classifying (3) the blocks intended for the access network, according to relative priorities, means for selecting (4) the next block intended for the access network, classified as having a highest priority, and means for successively sending (5) all the cells associated with that selected block.

It also comprises means for storing (6) information on the selected block, enabling to obtain the cells associated with that block, at least until all those cells have been sent in the access network, means for aborting (8) any current sending of cells associated with the selected block as soon as a new block being classified as having a higher priority arrives at the interface, and means for replacing (9) the aborted block with that newly arrived block, causing immediate sending of the cells associated with the latter. The selecting means further take into account the aborted block for selecting the next block to be sent, so that when that aborted block is selected again, the associated cells are completely retransmitted.

## Description

The present invention relates to transmission control device and process for an interface between communication networks, and to associated products.

In particular, it relates to the transmission of data cells into an ATM (for "Asynchronous Transfer Mode") network, those cells carrying data coming from another kind of network (the "origin" network). At the interface between the two networks, an ATM Adaptation Layer encapsulates in a known manner into ATM cells, the data proper to each defined set of data in the origin network, that set being herein below called "data block". Typically, the networks being packet-based, notably using the Internet Protocol ("IP"), the adaptation layer is AAL5 (for "ATM Adaptation Layer 5"), as specified in the ITU-T (for "International Telecommunications Union - Telecommunications") specification 1.363.5.

For example, a local area network ("LAN") such as an Ethernet network communicates with the ATM network through an IP router, which can be a DSL modem. At the interface between both networks, communications take place in the two directions, and they usually require appropriate encapsulation in both directions to take into account the passage from one protocol to another. However, particular problems arise concerning the transmissions from the Ethernet network towards the ATM network.

Namely, each data block of the Ethernet network, called a frame, is transformed into a plurality of ATM cells, which have to be successively transmitted. Now, several frames may arrive at the interface and be stored, waiting for their transmission, since the ATM cells are sent one after the other for each frame. Therefore, some high priority frames risk to stay at the interface for a long time until their turn arrives to be transmitted, causing significant deterioration of the Quality of Service ("QoS"). Notably, this may lead to unacceptable transmission conditions for telephony ("VoIP" for "Voice over IP") or for music or video communication in real time. Indeed, the use of (widely spread) AAL5 to encapsulate frames in ATM cells involves that once the first ATM cell corresponding to the beginning of a frame is sent, all remaining cells of the frame must follow. There is absolutely no way to interleave the sending of cells associated with different frames.

In the other direction, from the ATM to the Ethernet network, the situation is different since the successively received ATM cells are progressively exploited to form the Ethernet frames.

Several solutions have been proposed to take into account the priority level of the received frames for sending the ATM cells. They rely on an automatic determination of the transmission order for the waiting frames. In particular, a known interface device comprises multiple internal data queues, respectively corresponding to various priority levels of the frames. In such a device, the frames are distributed in the queues according to given criteria. Then, the frame (or the first frame) being in the highest priority queue that is not empty is chosen for next transmission.

Those systems prove efficient for QoS. However, their efficiency is restricted because of a relatively frequent situation known as "Head-of-Line blocking". This occurs when a frame having currently the highest priority at the interface (called first frame below) begins to be transmitted in the ATM network in the form of ATM cells, and another frame having a higher priority (called second frame below) arrives later at the interface. Then, the second frame must wait for the end of transmission of the first frame. In practice, this may cause very annoying delay, since the first frame may contain big volume data and have a large size (which may be 1500 bytes), and the second frame may arrive just after the starting of the first frame transmission.

Therefore, if the second frame requires a very short maximum transmission delay throughout the networks, this may lead to sensitive deterioration of the QoS, or even to failures. Such effects could consist notably in telephony interruption or audible delay, interruption in music, or video freezing.

To solve that difficulty, a solution consists in over-dimensioning the ATM network, so that the frames can be transmitted faster. However, this requires significant additional resources to be really effective. Moreover, the available bandwidth is often limited and cannot be over-provisioned, such as in DSL networks.

Another solution consists in reducing all frames in size, so that each frame is transmitted faster. However, such an adaptation reduces the network efficiency, since using small packets increases the encapsulation overhead and processing needed.

One could imagine modifying the ATM standard, in order to be able to interleave the sent ATM cells for several frames. This would indeed enable to take into account highest priority frames as soon as they arrive at the interface, and to later pursue the suspended sending of the cells associated with the partly transmitted frames, when the higher priority frames data have been completely sent.

However, such a fragmentation would make necessary to implement relatively complex proceedings, thus involving significant investment and development costs. Further, even if the interleaving capacity were to be adopted in the standard, ATM networks with the older version would still exist in parallel with the ATM networks using the updated version. Then, only the new ones could avoid the problems above.

The invention concerns a transmission control device adapted for an interface between a LAN network and an ATM network, making it possible to remedy the Head-of-Line blocking problem while being compatible with the present ATM standard, which requires sending consecutively all ATM cells for each LAN frame to be transmitted correctly. The control device according to the invention may further prove efficient while enabling cheap implementation, relying on existing facilities.

The control device of the invention more generally applies to an interface between a communication "origin" network and a communication "access" network, each data block circulating in the communication origin network being liable to be segmented and transformed at the interface into a plurality of data packets able to circulate in the communication access network, called cells, the cells associated with that block being intended to be sent successively in the communication access network from the interface. The terms "origin" and "access" here do not refer to a specificity of the networks, but to what is taken into consideration in the invention, namely the transmission in one direction (from the origin to the access network) - the transmission in the other direction not being considered presently.

Notably, the invention would apply as well to an ATM network which would have adopted a new standard version enabling interleaving, as suggested above. Namely, the cells could be sent "successively" without necessarily be sent "consecutively" (consecutively meaning without any inserted cell of another frame between them).

Moreover, the origin network could notably, but not only, consist of a LAN network, which could in particular consist in an Ethernet, a USB (for "Universal Serial Bus") or a token-ring network.

The invention also concerns a transmission control process, as well as a DSL modem and a computer program product, corresponding to the transmission control device of the invention.

To that end, the invention applies to a transmission control device for an interface between a communication origin network and a communication access network. Each data block circulating in the communication origin network is liable to be segmented and transformed at the interface into a plurality of data packets able to circulate in the communication access network, called cells, and the cells associated with that block are intended to be sent successively in the communication access network from the interface. The transmission control device comprises:
- means for receiving at the interface new blocks coming from the communication origin network and intended for the communication access network,
- means for classifying at the interface the blocks intended for the communication access network according to relative priorities of those blocks,
- means for selecting at the interface a next of the blocks intended for the communication access network, that next block being classified as having a highest priority compared with the other blocks at the interface,
- and means for successively sending in the communication access network all the cells associated with that selected next block.

According to the invention, the transmission control device also comprises:
- means for storing information on the next block, that information enabling to obtain the plurality of cells associated with that block, the storing means being intended to keep that information at least until all cells associated with that block have been sent in the communication access network,
- means for aborting any current sending of cells associated with the currently selected block, referred to hereinafter as the aborted block, as soon as a new block being classified as having a higher priority than the currently selected block arrives at the interface,
- and means for replacing the aborted block with the newly arrived block having a higher priority than the currently selected block, so as to cause immediate sending of the cells associated with the newly arrived block.

Further, the selecting means are intended to take into account the aborted block for selecting the next block to be sent in the communication access network, so that when the aborted block is selected again, the cells associated with that aborted block are completely retransmitted.

Thus, in practice, the aborted block is kept on the sender side and is retransmitted when no higher priority block must be sent.

So, the transmission control device of the invention uses quite unusual and unexpected mechanisms. Notably, for each block transmitted by means of associated cells, the information to obtain all those cells (which could be notably the complete block or the cells themselves) remains available at the interface during the whole transmission. By contrast, in the known methods, the cells are usually discarded as they are sent. For similar reasons, retransmission appears quite unexpected and as going against the well-known practice.

Also, aborting the block transmission is a known mechanism, but which is generally considered as a mere possible reaction to transmission errors. Surprisingly, in the invention, aborting execution is a deliberate part of the current functioning.

The transmission control device of the invention may considerably improve the QoS, in a possibly simple way not requiring modifications of existing standards. Indeed, it may completely remove the Head-of-Line blocking effect while not introducing any data loss via retransmission of the aborted block. Also, it may allow supporting real-time data with a very minimal delay.

The control device of the invention has particularly interesting applications in telephony (VoIP), music streaming and video on demand. It can be implemented in both software and hardware, and may notably apply to all packet-based ATM networks, in particular with Internet Protocol or Point-to-Point protocol.

It should be noted that the distinction between the means of the control device may be purely functional, and does not involve necessarily different physical entities.

Preferably, the classifying means are intended to distribute the blocks in at least two internal data queues, those queues being respectively provided for various priority levels. The use of those queues may prove very practical and efficient to classify the blocks and choose the next one to be sent, as well as to identify at once that a newly arrived block has a higher priority than the block that is currently transmitted.

The classifying means enable to give relative priorities to the blocks with respect to each other. This may be notably done through given priority levels among which each incoming block has to be positioned.

Advantageously, the aborting means are able to send a special cell marking the end of the block associated with the cells being currently sent, so as to abort the transmission of the cells. For ATM, this may take the form of a known mechanism, but used here in a diverted exploitation. Namely, an aborting technique intended for reacting to transmission errors is specified in the ITU-T specification, l.363.5.

The replacing means may be implicitly included in the selecting means, since after the aborting of the aborted block, the newly arrived block is to be selected as having the highest priority.

In preferred embodiments already mentioned above, which can be combined in any way:
- the communication origin network is a local area network and the communication access network is a wide area network;
- the communication access network is compliant with a rule according to which all cells associated with a given block of the communication origin network must be sent consecutively;
- the communication access network is compliant with an ATM mode; then, the communication access network is advantageously compliant with the AAL5 layer;
- the communication origin network is an Ethernet network, the blocks being constituted by frames; in alternative embodiments, the communication origin network is a USB or a token-ring network.

The invention applies in particular to a DSL modem comprising a transmission control device according to any embodiment of the invention. It applies also to an Ethernet bridge or switch comprising that control device.

Further, the invention concerns a transmission control process corresponding to the transmission control device, as defined in claim 10. That control process is preferably intended to be executed by a transmission control device according to the invention.

An additional aspect of the invention is a computer program product comprising program code instructions for executing the steps of the control process of the invention when that program is executed on a computer. By "computer program product", it is meant a support for computer program, which can consist not only in a storing space containing that program, such as a diskette or a cassette, but also in a signal, such as an electrical or optical signal.

The invention will be better understood and illustrated by means of the following not limitative examples of embodiments and execution, with reference to the appended figures on which:
- Figure 1 shows an interface between two communication networks, for example between an Ethernet LAN and an ATM network, based on IP communications;
- Figure 2 is a block diagram of a transmission control device according to the invention in the interface of Figure 1;
- Figure 3 consists in a simplified network protocol overview corresponding to a particular embodiment of the interface of Figure 1 with Ethernet and ATM networks, showing communication between a PC (Personal Computer) of the Ethernet network and a service provider of the ATM network;
- Figure 4 details Ethernet frame encapsulation in AAL5 layer and segmentation into ATM cells, corresponding to the embodiment of Figure 3;
- Figure 5 shows an internal priority queuing in the transmission control device associated with Figures 1 to 4;
- Figure 6 illustrates the steps of the transmission control process executed by the transmission control device associated with Figures 1 to 5;
- and Figure 7 gives a flow graph of the transmission control process of Figure 6.

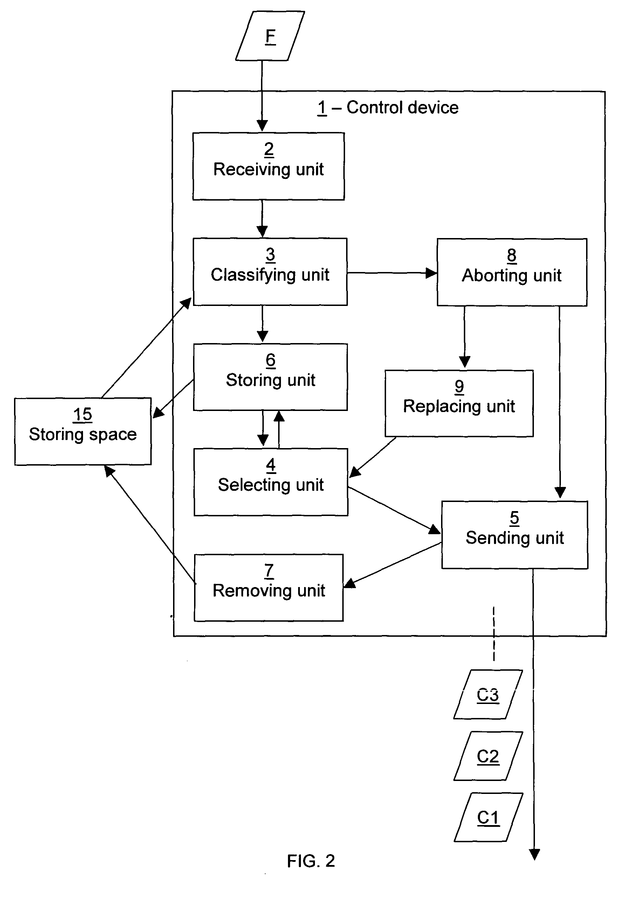

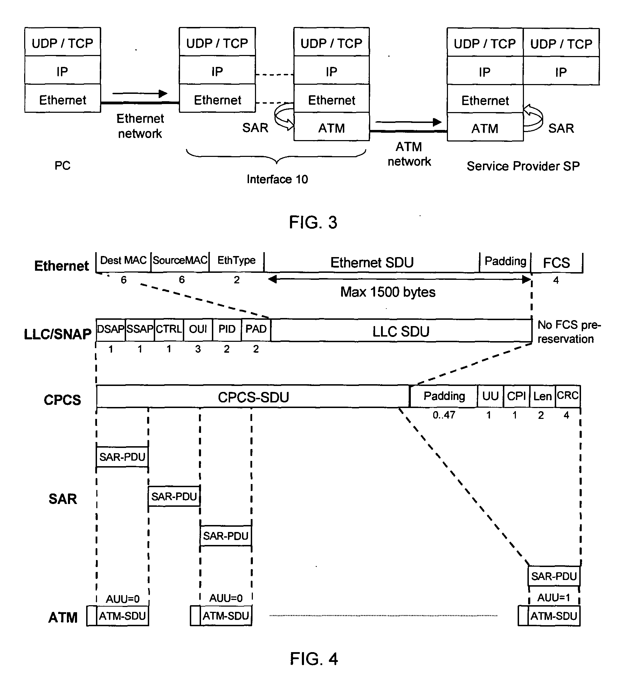

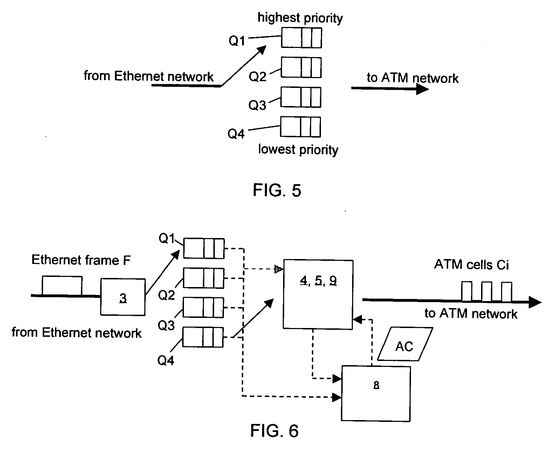

In Figures 2 and 6, the represented blocks are purely functional entities, which do not necessarily correspond to physical separated entities. Namely, they could be developed in the form of software, or be implemented in one or several integrated circuits. Moreover, in Figure 4, the true dimensions of the fields are in no way respected, and the chosen dimensions are used for clarity only.

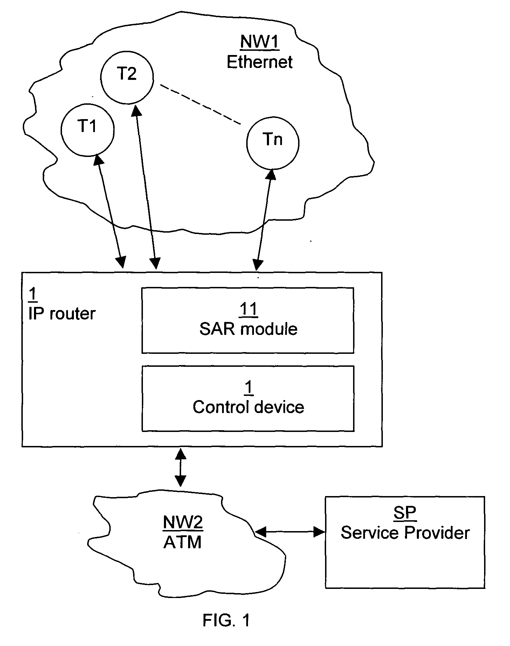

Two communication networks NW1 and NW2 (Figure 1) are connected via an interface 10. The first network NW1 is a LAN network including a plurality of access points T1, T2... Tn intended to be respectively connected to terminals. It consists for example in an Ethernet network. The second network NW2 is an ATM network, which enables the terminals in the LAN NW1 to access for example other LANs or a service provider SP. The ATM network NW2 uses for example DSL technology via a phone-cable.

In the illustration embodiment, the networks NW1 and NW2 are using the Internet Protocol. The interface 10 is then constituted by an IP router, which can consist for example in a DSL modem, and comprises a Segmentation And Reassembly ("SAR") module 11. The latter is in charge of segmenting and transforming frames F coming from the LAN NW1 into cells Ci (i = 1, 2...N_{F}) to be transmitted in the ATM network NW2 in one direction, and of assembling cells Ci (i = 1, 2...N_{F}) coming from the ATM network NW2 into frames F to be sent in the LAN NW1, in the other direction.

The interface 10 also comprises a transmission control device 1, which is devoted to controlling the communication of cells to the ATM network NW2.

The control device 1 (Figure 2) comprises:
- a receiving unit 2, for receiving at the interface 10 new frames F coming from the network NW1 and intended for the network NW2;
- a classifying unit 3, for classifying the frames F intended for the network NW2 according to priority levels;
- a selecting unit 4, for selecting the next frame F intended for the network NW2, as being the frame (or one of the frames) with the highest priority compared with the others;
- a sending unit 5, for successively sending in the network NW2 the cells Ci (i = 1, 2... N_{F}) associated with the selected frame F;
- a storing unit 6, for storing the selected frame F in a storing space 15 until the complete sending of that frame F;
- an aborting unit 8, for aborting the current sending of cells Ci (noted C'i below) associated with the selected frame F, noted F', as soon as a frame F with a higher priority than the selected frame F', noted F", arrives at the interface 10;
- a replacing unit 9, for replacing the aborted frame F' with the frame F" as being the currently selected frame F, so as to cause immediate sending of the cells Ci (noted C"i below) associated with the frame F";
- and a removing unit 7, for deleting the currently transmitted frame F from the storing space 15 when that frame F has been completely sent.

Various implementation features of the control device 1 in relation to the SAR module 11 will be given below, together with a description of putting it in practice.

The SAR module 11 uses an ATM Adaptation Layer consisting in AAL5 to encapsulate frame data into ATM cells Ci. For example (Figure 3), a PC is connected to one of the access points Ti of the Ethernet network NW1 and must send frames F to the service provider SP. The SAR module 11 proceeds with an encapsulation of the frames F from Ethernet to ATM. Thus, a frame F containing UDP or TCP (for "User Datagram Protocol" and "Transmission Control Protocol"), IP and Ethernet layers is transformed, at the SAR module 11, into cells Ci having further an ATM layer, the IP and Ethernet layers being respectively transmitted through the interface 10 by IP routing and Ethernet bridging / switching. At the arrival of the cells Ci in the service provider SP, they are in turn transformed and assembled by a local SAR system, which leads to packets where the Ethernet and ATM layers are no more present.

More specifically (Figure 4), the encapsulation at the SAR module 1 transforms an Ethernet frame F including successively the following fields: a destination MAC (for "Medium Access Control") address (6 bytes), a source MAC address (6 bytes), an Ethernet type (2 bytes), an Ethernet SDU (for "Service Data Unit"), padding (the SDU and padding fields together having maximum 1500 bytes), and further an FCS (for "Field Check Sequence") field (4 bytes).

An LLC/SNAP (for "Logical Link Control / Sub-Network Access Protocol") layer is used to indicate which type of SDU is encapsulated in a CPCS (for "Common Part Convergence Sub-layer") layer - which is the actual AAL5 layer. The LLC/SNAP layer includes successively the following fields: DSAP (for "Destination Service Access Point", 1 byte), SSAP (for "Source SAP", 1 byte), CTRL (for "ConTRoL", 1 byte), OUI (for "Organizational Unique Identifier", 3 bytes), PID (for "Packet IDentifier", 2 bytes), PAD (for "PADding", 2 bytes), and LLC SDU, which contains the Ethernet frame above, without its FCS field. No FCS field is pre-reserved.

The CPCS layer includes successively the following fields: a CPCS SDU, which contains the LLC/SNAP layer, padding (0 to 47 bytes), UU (for "User to User", 1 byte), CPI (for "Common Part Indicator", 1 byte), Length (2 bytes), and CRC (for "Cyclic Redundancy Check", 4 bytes).

That CPCS layer, through SAR, gives the cells Ci, each with an SAR-PDU (for "Protocol Data Unit"), which leads to an ATM-SDU of 48 bytes with a 5 bytes header. All cells Ci associated with the frame F have an AUU field (for "ATM User-to-User indication") that amounts to 0, except the last cell C-N_{F} associated with the frame F, for which the AUU field has the value 1.

This encapsulation enables to rebuild the original encapsulated Ethernet frame F at the receiving side.

The classifying unit 3 is intended to classify the Ethernet frames F (Figure 5) into multiple internal data-queues Q1, Q2, Q3 and Q4 in the IP router 10, each of them corresponding to a different priority level. From those queues Q1-Q4, the frames F are submitted to the SAR module 11 to be embedded in AAL5 layer and segmented in ATM cells Ci.

The selecting unit 4 (Figure 6) is able to schedule, namely to decide which Qj' of the queues Q1-Q4 to serve based upon the priority, and to trigger the sending by the sending unit 5 of the ATM cells Ci from the served queue Qj' to the ATM network NW2. Further, the aborting unit 8 is provided for sending an AAL5 abort cell AC to abort the frame F' being currently sent from the served queue Qj', when a new frame F" arrives in a higher priority queue Qj".

The abort cell AC consists in an ATM cell containing the trailer of the AAL5 frame F' (which is indicated by setting the AUU bit field to 1), and having its length field set to zero. The zero length is interpreted by the receiver as an abort, which results in discarding all the ATM cells Ci of the currently received frame F'.

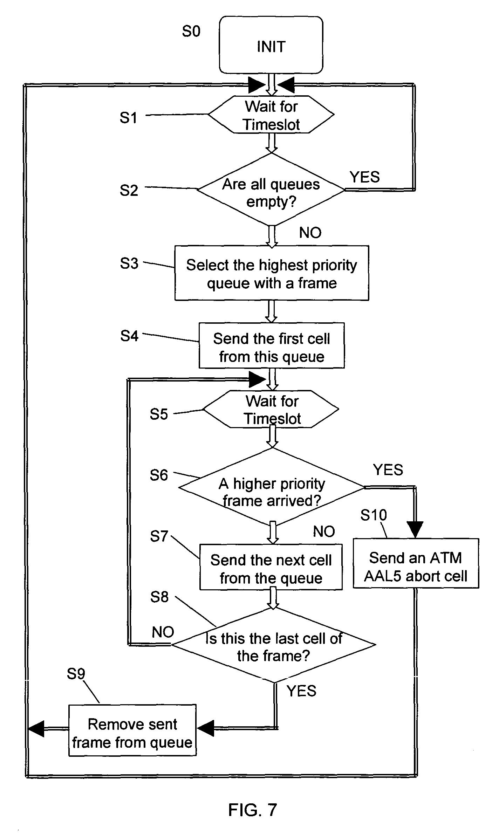

The IP router 10 comprising the control device 1 executes through the following steps (Figure 7):
- in an initial step S0, all units are instantiated and set to their initial state;
- then (step S1), a Wait for Timeslot state waits until the units have a timeslot to perform operations and proceed to next state; the timeslot determines when an ATM cell can be sent and this way determines the cell-rate (and bit-rate);
- if all queues Q1-Q5 are empty (step S2), it is proceeded to Wait for Timeslot state of step S2 to wait for a new timeslot; on the other hand, if at least one of the queues Q1-Q5 contains a frame F, it is proceeded to a next step S3;
- the selecting unit 4 selects (step S3) the highest priority queue Qj' that has a frame F' and proceeds to a next step S4;
- the sending unit 5 sends (step S4) the first cell C1 of the queue Qj' selected in step S3 to the ATM network NW2;
- based on a further Wait for Timeslot state (step S5), if a frame F" (step S6) arrives in a queue Qj" with a higher priority than the currently selected queue Qj', it is proceeded to step S10; otherwise, it is proceeded to step S7;
- the sending unit 5 sends (step S7) the next cell Ci (i = 2... N_{F'}) of the current frame F' in the selected queue Qj' and proceeds to step S8;
- if the ATM cell (step S8) sent in step S7 is the last cell C-N_{F'} of the frame F', it is proceeded to step S9; otherwise, it is proceeded to step S5 to await a new timeslot;
- only after a successful transmission of the complete frame F', this frame F' is removed (step S9) from the queue Qj'; it is then proceeded to step 1 to await a new timeslot;
- in step S10, the aborting unit 8 sends an AAL5 abort cell AC and proceeds to step S1.

## Claims

1. Transmission control device (1) for an interface (10) between a communication origin network (NW1) and a communication access network (NW2), each data block (F) circulating in the communication origin network (NW1) being liable to be segmented and transformed at the interface (10) into a plurality of data packets (Ci) able to circulate in the communication access network (NW2), called cells, said cells (Ci) associated with said block being intended to be sent successively in the communication access network (NW2) from the interface (10), the transmission control device (1) comprising:
- means for receiving (2) at the interface (10) new blocks (F) coming from the communication origin network (NW1) and intended for the communication access network (NW2),
- means for classifying (3) at the interface (10) the blocks (F) intended for the communication access network (NW2) according to relative priorities of said blocks,
- means for selecting (4) at the interface (10) a next of said blocks (F) intended for the communication access network (NW2), said next block being classified as having a highest priority compared with the other blocks at the interface (10),
- and means for successively sending (5) in the communication access network (NW2) all the cells (Ci) associated with said selected next block (F),
**characterized in that** the transmission control device also comprises:
- means for storing (6) information on said next block (F), said information enabling to obtain the plurality of cells (Ci) associated with said block (F), said storing means being intended to keep said information at least until all cells associated with said block have been sent in the communication access network (NW2),
- means for aborting (8) any current sending of cells (Ci) associated with the currently selected block (F), referred to hereinafter as the aborted block (F'), as soon as a new block being classified as having a higher priority than the currently selected block arrives at the interface (10),
- and means for replacing (9) the aborted block (F') with the newly arrived block (F") having a higher priority than the currently selected block, so as to cause immediate sending of the cells associated with the newly arrived block (F"),
and **in that** said selecting means (4) are intended to take into account said aborted block (F') for selecting said next block (F) to be sent in the communication access network (NW2), so that when said aborted block is selected again, the cells associated with said aborted block (F') are completely retransmitted.

2. Transmission control device (1) according to claim 1, **characterized in that** said classifying means (3) are intended to distribute the blocks (F) in at least two internal data queues (Q1-Q4), said queues being respectively provided for various priority levels.

3. Transmission control device (1) according to any of claims 1 or 2, **characterized in that** said aborting means (8) are able to send a special cell (AC) marking the end of the block (F) associated with the cells (Ci) being currently sent, so as to abort the transmission of said cells.

4. Transmission control device (1) according to any of the preceding claims, **characterized in that** said communication origin network (NW1) is a local area network and **in that** said communication access network (NW2) is a wide area network.

5. Transmission control device (1) according to any of the preceding claims, **characterized in that** said communication access network (NW2) is compliant with a rule according to which all cells (Ci) associated with a given block (F) of the communication origin network (NW1) must be sent consecutively.

6. Transmission control device (1) according to any of the preceding claims, **characterized in that** said communication access network (NW2) is compliant with an asynchronous transmission mode.

7. Transmission control device (1) according to claim 6, **characterized in that** said communication access network (NW2) is compliant with the asynchronous transmission mode adaptation layer 5, known as AAL5.

8. Transmission control device (1) according to any of the preceding claims, **characterized in that** said communication origin network (NW1) is an Ethernet network, said blocks (F) being constituted by frames.

9. Digital subscriber line modem (10) comprising a transmission control device according to any of the preceding claims.

10. Transmission control process at an interface (10) between a communication origin network (NW1) and a communication access network (NW2), each data block (F) circulating in the communication origin network (NW1) being liable to be segmented and transformed at the interface (10) into a plurality of data packets (Ci) able to circulate in the communication access network (NW2), called cells, said cells (Ci) associated with said block being intended to be sent successively in the communication access network (NW2) from the interface (10), the transmission control process comprising the steps of:
- receiving at the interface (10) new blocks (F) coming from the communication origin network (NW1) and intended for the communication access network (NW2),
- classifying at the interface (10) the blocks (F) intended for the communication access network (NW2) according to priority levels,
- selecting at the interface (10) a next of said blocks (F) intended for the communication access network (NW2), said next block being classified as having a highest priority compared with the other blocks at the interface (10),
- and successively sending in the communication access network (NW2) all the cells (Ci) associated with said selected next block (F),
**characterized in that** the transmission control process also comprises the steps of:
- storing information on said next block (F), said information enabling to obtain the plurality of cells (Ci) associated with said block (F), at least until all cells associated with said block have been sent in the communication access network (NW2),
- aborting any current sending of cells (Ci) associated with the currently selected block (F), referred to hereinafter as the aborted block (F'), as soon as a new block (F") being classified as having a higher priority than the currently selected block arrives at the interface (10),
- and replacing the aborted block (F') with the newly arrived block (F") having a higher priority as the currently selected block, so as to cause immediate sending of the cells associated with the newly arrived block (F"),
and the control process being **characterized in that** said selecting step takes into account said aborted block (F') for selecting said next block (F) to be sent in the communication access network (NW2), so that when said aborted block is selected again, the cells associated with said aborted block (F') are completely retransmitted,
said transmission control process being preferably intended to be executed by a transmission control device according to any of claims 1 to 8.

11. Computer program product comprising program code instructions for executing the steps of the control process of claim 10 when said program is executed on a computer.
